# EUROPEAN PATENT APPLICATION

(11) **EP 4 715 973 A2**
(43) Date of publication of application: **25.03.2026**
(21) Application number: 25192403.1
(22) Date of filing: 29.07.2025
(51) Int. Cl.: H01M 50/143, H01M 50/227, H01M 50/231

(54) **THERMAL BARRIER AND BATTERY MODULE**

(30) Priority: 24.09.2024 KR 20240128608
(71) Applicant: SK On Co., Ltd., Seoul 03161 (KR)
(72) Inventor: KIM, Tae Il, 34124 Daejeon (KR); KWON, Dae Won, 34124 Daejeon (KR); KIM, Suk Chul, 34124 Daejeon (KR); KIM, Yong Uk, 34124 Daejeon (KR); PARK, Byung Jun, 34124 Daejeon (KR); PARK, Sin Ho, 34124 Daejeon (KR); BAEK, Moo Han, 34124 Daejeon (KR); SEOK, Jong Ho, 34124 Daejeon (KR); HONG, Seung Gee, 34124 Daejeon (KR)
(74) Representative: Prüfer & Partner mbB Patentanwälte · Rechtsanwälte

(57) **Abstract**

The present disclosure provides a thermal barrier and a battery module, wherein the thermal barrier comprises a heat-absorbing layer comprising a hydrogel, wherein the hydrogel comprises an absorbent polymer and water retained in the absorbent polymer, and the hydrogel comprises 3 to 10 parts by weight absorbent polymer based on 100 parts by weight of water.

## Description

### TECHNICAL FIELD

The disclosure and implementations disclosed in this patent document generally relate to a thermal barrier and a battery module.

### BACKGROUND

Thermal runaway in lithium-ion batteries is a dangerous phenomenon where an uncontrolled, self-accelerating increase in temperature can lead to fire or explosion. Thermal runaway is a chain reaction where the heat generated within a battery exceeds its ability to dissipate, leading to a rapid temperature increase.

Battery modules typically include multiple battery cells, which increases the risk of thermal runaway, as heat generated in one battery cell can spread and cause heat generation in another, leading to thermal runaway reactions in multiple battery cells. What is needed is a way to reduce the risk of thermal runaway reactions in battery modules comprising multiple battery cells.

### SUMMARY

The present disclosure provides thermal barrier for use in batteries to prevent propagation of heat or flames occurring in a one battery cell within a battery module to another battery cell in the module (e.g., prevent a thermal runaway).

In one aspect, the present disclosure provides a thermal barrier comprising a heat-absorbing layer comprising a hydrogel, wherein the hydrogel comprises an absorbent polymer and water retained in the absorbent polymer, and wherein the hydrogel comprises about 3 parts by weight to about 10 parts by weight of the absorbent polymer based on 100 parts by weight of water.

In one embodiment, the absorbent polymer comprises at least one polymer selected from the group consisting of polyacrylamide (PAM), polyacrylic acid (PAA), and a PAM-PAA copolymer. In certain embodiments, the absorbent polymer comprises PAM. Optionally, the thermal barrier may comprise a second absorbent polymer.

In certain embodiments, the hydrogel displays a falling distance of 60 mm or less after 5 minutes when measured according to ASTM D4212 using a Zahn Cup viscometer having a diameter of 4.39 mm.

In one embodiment, the heat-absorbing layer is encased within a shell. In one embodiment, the shell has a thickness of 80 to 160 µm. In one embodiment, the shell comprises a laminate sheet comprising a metal foil, *e.g.,* an aluminum foil.

In one embodiment, the aluminum foil is disposed between an inner resin layer and an outer layer resin layer. In certain embodiments, the laminate sheet further comprises an adhesive on one or both sides of the metal, e.g., aluminum, foil.

In certain embodiments, the outer resin layer comprises a first outer resin layer adjacent to the aluminum foil, and a second outer resin layer located on the first outer resin layer, optionally wherein an adhesive is disposed between the first outer resin layer and the aluminum foil.

In one embodiment, the first outer resin layer comprises a polyamide. In one embodiment, the second outer resin layer comprises polyethylene terephthalate.

In one embodiment, the thermal barrier may further comprise a mica sheet, e.g., disposed on at least one surface of the heat-absorbing layer or on the shell encasing the heat-absorbing layer. The mica sheet may, in some embodiments, comprise mica and a heat-resistant inorganic fiber. The mica in the mica sheet may be, for example, muscovite, phlogopite, or a combination thereof. The heat-resistant inorganic fibers may be at least one selected from the group consisting of a glass fiber, an alumina fiber, a zirconia fiber, a mullite fiber, rock wool, asbestos, silica wool, and ceramic wool. In certain embodiments, the mica sheet further comprises about 1 wt% to about 10 wt% of a binder.

In one exemplary embodiment, a thermal barrier comprising a heat-absorbing layer comprises a hydrogel, wherein the hydrogel comprises water and about 3 parts by weight to about 10 parts by weight of PAM based on 100 parts by weight.

In another exemplary embodiment, a thermal barrier comprises a shell encasing a heat-absorbing layer comprising a hydrogel, wherein the hydrogel comprises water and about 3 parts by weight to about 10 parts by weight of PAM based on 100 parts by weight.

In yet another exemplary embodiment, a thermal barrier comprises
a) a shell encasing a heat-absorbing layer comprising a hydrogel, wherein the hydrogel comprises water and about 3 parts by weight to about 10 parts by weight of PAM based on 100 parts by weight; and
b) a mica sheet disposed on at least one layer of the shell.

In another aspect, the present disclosure provides a battery module comprising a cell assembly comprising two or more battery cells; and a module case comprising the cell assembly. The cell assembly may comprise a thermal barrier as described according to any embodiment herein, disposed i) between adjacent battery cells, ii) between a module case and the battery cells at the ends of the cell assembly; or iii) both i) and ii).

### BRIEF DESCRIPTION OF DRAWINGS

Certain aspects, features, and advantages of the present disclosure may be illustrated by the following detailed description with reference to the accompanying drawings.
**FIG. 1** depicts a cross-section of one embodiment of a thermal barrier comprising a hydrogel.
**FIG. 2** depicts a cross-section of another embodiment of thermal barrier comprising a hydrogel heat absorbing layer encased within a shell.
**FIG. 3** depicts a cross-section of one embodiment of a shell which may be used to encase a hydrogel heat absorbing layer, the shell comprising an inner resin layer, a metal foil, and an outer resin layer.
**FIG. 4** depicts a cross-section of one embodiment of a shell wherein the outer resin layer comprises a first outer resin layer and a second outer resin layer.
**FIG. 5** depicts a cross-section of one embodiment of a shell comprising an adhesive layer on each side of the metal foil.
**FIG. 6** depicts a cross-section of one embodiment of a shell comprising an adhesive layer on each side of the metal foil and wherein the outer resin layer comprises a first outer resin layer and a second outer resin layer.
**FIG. 7** depicts a cross-section of one embodiment of a thermal barrier comprising a hydrogel heat absorbing layer and a mica sheet.
**FIG. 8** depicts a cross-section of one embodiment of a thermal barrier comprising a mica sheet and a shell encasing a hydrogel heat absorbing layer.
**FIG. 9** depicts a cross-section of one embodiment of a battery module comprising multiple battery cells, wherein thermal barriers are disposed between adjacent battery cells.
**FIG. 10** depicts a cross-section of one embodiment of a battery module comprising multiple battery cells, in which thermal barriers are disposed between adjacent battery cells and between a module case and the battery cells at the ends of the cell assembly.
**FIG. 11** depicts a cross-section of one embodiment of battery module in which thermal barriers are disposed between adjacent battery cells within a cell assembly and between all sides of the cell assembly and module case in which it is disposed.
**FIG. 12** is a graph illustrating temperature change over time in a battery cell adjacent to but separated from a battery subjected to thermal runaway conditions by a thermal barrier manufactured according to Inventive Example 2.

### DETAILED DESCRIPTION

Since the embodiments described in the present specification may be modified in many different forms, the technology is not limited to the embodiments set forth herein.

Throughout the specification, unless otherwise particularly stated, the word "comprising", "including", "containing", "being provided with", or "having" does not mean the exclusion of any other constituent element, but rather means further inclusion of other constituent elements, and elements, materials, or processes which are not further listed are not excluded.

The numerical range used in the present specification includes all values within the range, including the lower limit and the upper limit, increments logically derived from the form and spanning of a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding of a value are also included in the defined numerical range.

Hereinafter, unless otherwise defined, "about" may be considered as a value within 30%, 25%, 20%, 15%, 10%, 5%, 3%, 2%, 1%, or 0.5% of a stated value. In certain embodiments, "about" may be within 10% of the stated value.

Features of the present disclosure disclosed in this patent document may be described by example embodiments with reference to the accompanying drawings.

The present disclosure provides thermal barriers capable of blocking thermal runaway in a battery module.

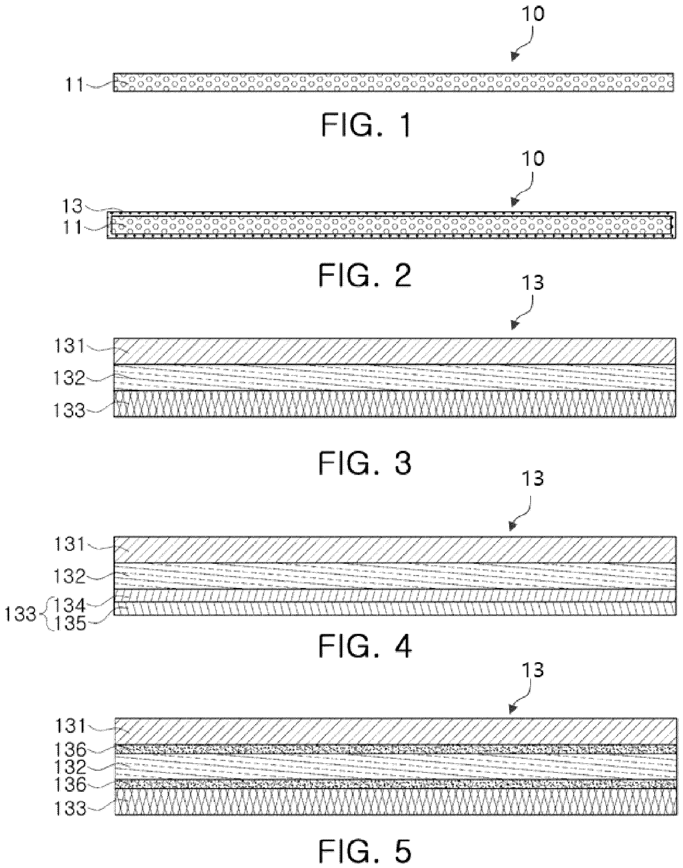

The thermal barriers provided herein comprise a heat-absorbing layer, which comprises a hydrogel. The hydrogel comprises an absorbent polymer and water retained in the absorbent polymer. One example of the thermal barrier suitable for use in a battery module is illustrated in **FIG. 1****.** In **FIG. 1****,** a thermal barrier **10** comprises a heat-absorbing layer **11,** which, as described herein, comprises a hydrogel.

In certain embodiments, the absorbent polymer may form a matrix, e.g., to retain the water, in the hydrogel of the thermal barrier. In certain embodiments, the absorbent polymer comprises a material having a polar or charged functional group, and may be soluble in water. For example, the absorbent polymer may comprise at least one selected from, but not limited to, polyacrylamide (PAM), polyacrylic acid (PAA), and a PAM-PAA copolymer.

In some embodiments, the hydrogel matrix may further comprise a second absorbent polymer. The type of second absorbent polymer is not particularly limited, as long as it is incorporated into the matrix of the hydrogel. Non-limiting examples of suitable second absorbent polymers include acrylic acid, such as polymers or copolymers of acrylic acid, acrylamide, and maleic anhydride; and amine-functional polymers, such as a polymer having an amine group in a main or side chain thereof, e.g., allylamine, ethyleneimine, oxazoline, and the like.

The absorbent polymer may be included in the hydrogel matrix in an amount of about 3 to about 10 parts by weight based on 100 parts by weight of the water retained therein. For example, the absorbent polymer may be included in an amount of about 4 to about 10 parts by weight, about 5 to about 10 parts by weight, about 3 to about 5 parts by weight, about 3 to about 4 parts by weight, or about 4 to about 5 parts by weight based on 100 parts by weight of the water retained therein.

Without wishing to be bound by theory, it is believed that when a hydrogel of a thermal barrier layer for use, e*.g.,* between two cells of a battery module, comprises an absorbent polymer in these ranges, the hydrogel displays excellent stability without fluidity due to the ability of it to support its own weight (self-weight).

"Fluidity" of a hydrogel refers to the ability of the hydrogel to maintain its shape without collapsing within 3 seconds after being disposed on a flat surface at room temperature (25 °C). Fluidity may be measured, for example, in a test according to ASTM D4212, for example, using a Zahn Cup viscometer, and measuring a "falling distance" over a certain period of time as a proxy for efflux time. For example, when using a Zahn cup having a diameter of 4.39 mm, a hydrogel suitable for use in a heat-absorbing layer as disclosed herein may be characterized as "having fluidity" when the hydrogel "falls" 60 mm or less, for example, 50 mm or less, over a period of 5 minutes.

Although the above-prescribed range that a hydrogel comprise about 3 parts by weight to 10 parts by weight of absorbent polymer is not absolutely fixed, it has been observed, in some embodiments, that when a hydrogel comprises less than 3 parts by weight of absorbent polymer, the hydrogel may have fluidity and be unable to support its own weight, whereas when a hydrogel comprises more than 10 parts by weight of an absorbent polymer, the absorbent polymer may solidify, such as in a granular state, and may not have a gel phase. Without a sufficient gel phase, water may leak out of the hydrogel and cause a short circuit within the battery module, e.g., with a bus bar, a sensing line, or the like of the module.

In embodiments wherein the hydrogel matrix comprises two absorbent polymers, *e.g.,* a first absorbent polymer and a second absorbent polymer as described above, the second absorbent polymer may be included in an amount of less than 50 wt%, for example, 30 wt% or less, 20 wt% or less, or 10 wt% or less, and 1 wt% or more, 2 wt% or more, 3 wt% or more, or 5 wt% or more, based on the total weight of the hydrogel matrix (*e.g.,* not including any water retained therein). For example, a hydrogel matrix that may be used in a heat-absorbing layer, *e.g.,* between two cells of a battery module, may comprise about 1 wt% to about 49 wt%, about 1 wt% to about 40 wt%, about 1 wt% to about 30 wt%, about 1 wt% to about 20 wt%, about 1 wt% to about 10% wt%, about 5 wt% to about 49 wt%, about 5 wt% to about 40 wt%, about 5 wt% to about 30 wt%, about 5 wt% to about 20 wt%, or about 5 wt% to about 10 wt% of the second absorbent polymer, based on the total weight of the hydrogel matrix.

The water retained within the hydrogel matrix may be absorbed by the absorbent polymer of the hydrogel matrix , and retained therein. Without wishing to be bound by theory, it is believed that the water retained in the hydrogel matrix may absorb heat and evaporate when a thermal runaway phenomenon occurs in any one cell in the battery module, thereby dissipating the heat generated in the battery cell, thereby blocking or delaying thermal runaway. Therefore, the hydrogel retaining water in the absorbent polymer may be provided as a heat-absorbing layer, and the heat-absorbing layer including the hydrogel may be provided as a thermal barrier for use in a battery module, e.g., between two battery cells, to reduce the risk of thermal runaway in the battery module.

The heat-absorbing layer may comprise a hydrogel, consist of, or consist essentially of a hydrogel. For example, the hydrogel itself may be used alone as a heat-absorbing layer in a battery module. As used herein "hydrogel heat-absorbing layer" is used to refer to a layer comprising, consisting of, or consisting essentially of, a hydrogel as described herein.

Advantageously, hydrogels are flexible and may be easily conformed to a desired shape and/or thickness at a desired location with respect to a battery cell or module. The thickness of a heat-absorbing layer is not particularly limited, and in some embodiments, may have a thickness of, for example, about 1 mm to about 10 mm.

The heat-absorbing layer and the hydrogel therein, may be encased in a shell **13** as shown in **FIG. 2****,** which depicts a cross-section of one embodiment of a thermal barrier suitable for use in a battery module. The thermal barrier **10** comprises a hydrogel heat-absorbing layer **11** encased in a shell **13,** which may provide the hydrogel with structural stability to help it maintain a certain shape.

The shell may be made of any material. In certain embodiments, the shell is made from material having high thermal conductivity so that heat generated from a battery cell can be efficiently transferred to the heat absorbing hydrogel. For example, the shell may comprise a metal foil, such as aluminum, and more specifically, a metal foil such as an aluminum foil.

In one embodiment, the shell may be or comprise a laminate sheet comprising the metal foil, e.g., aluminum foil. In certain embodiments, the laminate sheet may further comprise one or more layers of a resin, which may be disposed on one or both surfaces of the metal foil. In certain embodiments, the metal foil **132** is disposed between an inner resin layer **131** and an outer layer resin layer **133,** such as shown in **FIG. 3****.**

As illustrated in **FIG. 3****,** a shell **13** encasing a hydrogel heat-absorbing layer may comprise an inner resin layer **131,** a metal foil **132,** and an outer resin layer **133.**

The inner and outer resin layers may be made of the same materials, or of different materials. For example, in one embodiment, an inner resin layer, which will be in contact with the hydrogel heat-absorbing layer, may be made of a material that aids in sealing the hydrogel heat-absorbing layer. The inner resin layer may be formed of, *e.g.,* a polyolefin-based resin such as polyethylene, polypropylene, or the like. Sealing of hydrogel heat-absorbing layer within the shell may be accomplished by applying heat and pressure to the assembled shell.

The outer resin layer may comprise an insulating material, as it is exposed to the internal space of the battery cell or the module case. Outer resin layer material may further display mechanical strength. Examples of resins suitable for use as the outer resin layer include polyester resins, such as polyethylene terephthalate, polybutylene terephthalate, polyethylene naphthalate, polybutylene naphthalate, co-polymerized polyester, polycarbonate, or the like, or a polyamide resin.

The outer resin layer may comprise one layer or, in some embodiments, may comprise two or more layers. For example, metal foil **132** (*e.g.,* aluminum foil) may be disposed between an inner resin layer **131** and an outer layer resin layer **133,** wherein the outer resin layer **133** comprises a first outer resin layer **134** adjacent to the metal foil **132** and a second outer resin layer **135** disposed on the first outer resin layer **134,** such as shown in **FIG. 4****.**

As illustrated in **FIG. 4****,** a shell **13** comprises an inner resin layer **131** on one surface of a metal foil **132** and an outer resin layer **133** on the other surface of the metal foil **132.** The outer resin layer **133** comprises a first outer resin layer **134** adjacent to the metal foil **132,** and a second outer resin layer **135** on the first outer resin layer **134.** Although not illustrated in the drawing, the outer resin layer **133** may have more than two layers, *e.g.,* three, four, or more layers. The first outer resin layer and the second outer resin layer may be comprised of different resins. For example, the first outer resin layer may be a polyamide resin layer, and the second outer resin layer may be a polyethylene terephthalate resin layer.

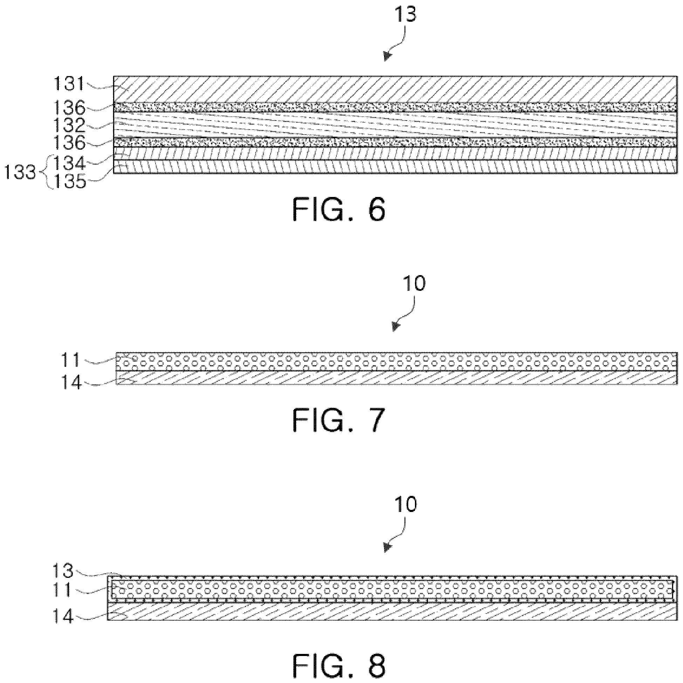

In certain embodiments, an adhesive layer may be included between the metal foil and the inner resin layer and/or between the metal foil and the outer resin layer, to improve adhesion of the resin layers to the foil. An example of an embodiment comprising an adhesive layer **136** is illustrated in **FIGs. 5** and **6****.** **FIG. 5** depicts a cross-section of one embodiment of a shell comprising an adhesive layer **136** on each side of the metal foil **132,** which firmly adheres the metal foil **132** to the inner resin layer **131,** and the metal foil **132** to the outer resin layer **133.** **FIG. 6** depicts a cross-section of one embodiment of a shell **13** comprising an adhesive layer **136** on each side of the metal foil **132** and wherein the outer resin layer comprises a first outer resin layer and a second outer resin layer, which firmly adheres the metal foil **132** to the inner resin layer **131,** and the metal foil **132** to the outer resin layer **133.** Examples of materials suitable for use as an adhesive layer include polyurethane-based adhesives comprising a polyol, such as polyester polyol, polyether polyol, acrylic polyol, carbonate polyol, or the like, and a curing agent comprising a bifunctional or higher isocyanate compound.

The total thickness of the shell, including all layers thereof, may be about 80 µm to about 160 µm, for example, about 100 µm to about 150 µm. While the above recited thickness is not strictly required, it has been observed in some embodiments that, when the thickness of a shell is less than about 80 µm, the shell is not strong and may easily break upon external impact. Conversely, employing a shell thickness exceeding about 160 µm, in some embodiments, has been observed to substantially improve the properties thereof, and only adds weight, volume (spatial loss), and cost to the manufacture the battery module.

In certain embodiments, a thermal barrier suitable for use between battery cells as described herein may comprise mica in the form of a mica sheet. One embodiment of a thermal barrier **10** comprising a mica sheet **14** is schematically illustrated in **FIG. 7****,** which depicts a cross-section of one embodiment of a thermal barrier **10** comprising a hydrogel heat absorbing layer **11** and a mica sheet **14.** Although **FIG. 7** illustrates a mica sheet **14** disposed on only one surface of the hydrogel heat-absorbing layer **11,** in other embodiments, a mica sheet may be disposed on both surfaces of the hydrogel heat-absorbing layer.

The properties of the mica sheet are not particularly limited provided the sheet has been manufactured using a mica having sufficient heat resistance. Incorporating a mica sheet in a thermal barrier between battery cells may reduce the heat *(e.g.,* by flames) transferred to the heat-absorbing layer, thereby preserving the integrity of the heat-absorbing layer for a longer period of time, and delaying propagation of heat and/or flame to adjacent cells of a battery module.

In certain embodiments, the mica are mica flakes. By using mica flakes, propagation heat or flames occurring in one battery cell to an adjacent cell is more effectively blocked. Examples of suitable flaked mica that can be used include, but are not limited to, muscovite, phlogopite, or a combination thereof.

A mica sheet may further comprise a binder, for example, an organic or inorganic binder, which may maintain the mica in a sheet shape. In certain embodiments, a binder having heat resistance may be used. A mica sheet may comprise a binder in an amount of about 10 wt% or less, such as about 1 wt% to about 10 wt%. Although a binder content of about 1 wt% to about 10 wt% is not strictly required, it has been observed that, in some embodiments, using less than about 1 wt% of binder is insufficient to maintain a sheet shape. When more than about 10 wt% of the binder is used, there is risk that the binder may be burned by heat or flames, thereby negating the desired effect of blocking flame or heat.

In certain embodiments, a mica sheet suitable for use in a thermal barrier between battery cells may further comprise a heat-resistant inorganic fiber. The heat-resistant inorganic fiber may have heat resistance to withstand high temperatures caused by heat and flame, and thus may block the spread of flames. The heat-resistant inorganic fiber may be a ceramic fiber such as a glass fiber, an alumina fiber, a zirconia fiber, a mullite fiber, rock wool, asbestos, silica wool, ceramic wool, or any combination thereof.

The thickness of the mica sheet is not particularly limited provided it displays sufficient heat resistance and fire resistance. For example, a mica sheet may have a thickness of at least about 0.05 mm, such as about 0.05 mm to about 1.0 mm or about 0.1 mm to about 1.0 mm. The thickness as described above may provide heat resistance and fire resistance, and furthermore, bendability.

Although **FIG. 7** illustrates a mica sheet **14** disposed directly on the hydrogel heat-absorbing layer **11,** in other embodiments, the hydrogel heat-absorbing layer **11** may be encased in a shell **13,** and a mica sheet **14** may be disposed the shell **13,** as illustrated in **FIG. 8****.** In **FIG. 8****,** a heat-absorbing layer **11 is** encased within a shell **13,** and a mica sheet **14** is disposed on the shell **13** to provide a thermal barrier **10.**

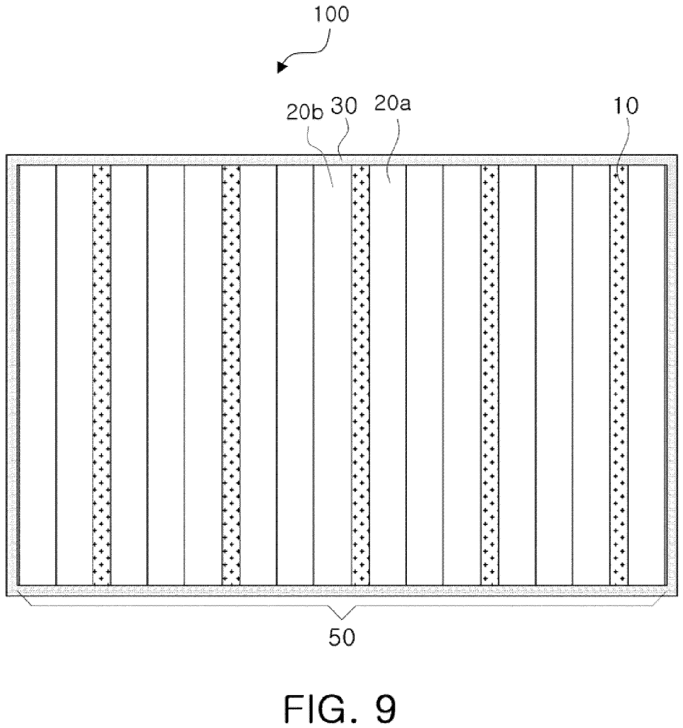

Battery modules typically comprise a module case and a cell assembly, comprising multiple battery cells therein. Thermal barriers, as provided herein may be disposed between adjacent battery cells within a cell assembly of a battery module and/or between a battery cell and another adjacent component of the battery module, *e.g.,* in the module case, to block or delay any thermal runaway that may occur. In one embodiment, a thermal barrier **10** is disposed between one battery cell and an adjacent battery cell **20a, 20b** in a cell assembly **50,** such as shown in **FIG. 9. FIG. 9** depicts a cross-section of one embodiment of a battery module **100** comprising a module case **30** and cell assembly **50** disposed therein. The cell assembly **50** comprises multiple battery cells, wherein thermal barriers **10** are disposed between adjacent battery cells **20a, 20b** so that a thermal runaway occurring in one battery cell may be blocked or suppressed from propagating to additional battery cells.

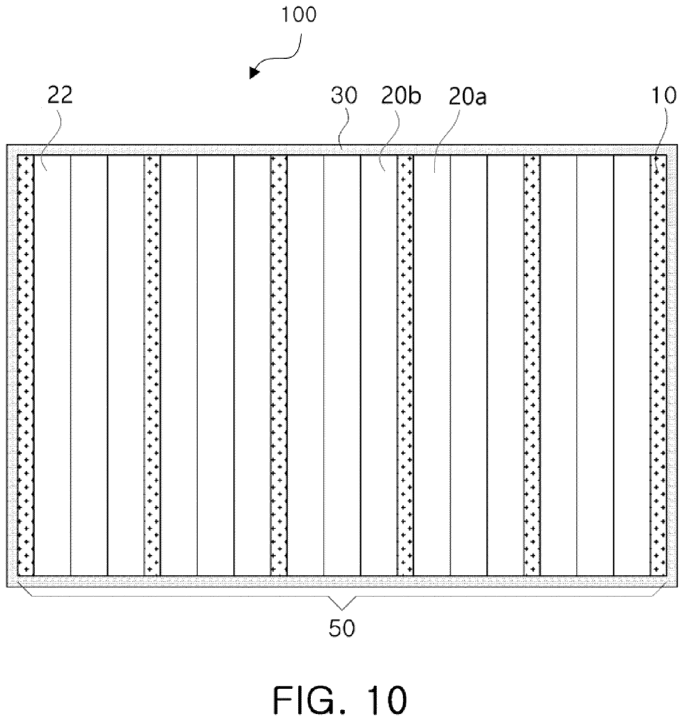

As another embodiment, the thermal barrier **10** is disposed between a module case **30** and the battery cells **22** at the ends of the cell assembly **50,** such as illustrated in **FIG. 10****.** In **FIG. 10****,** the thermal barrier **10** is disposed between adjacent battery cells **20a, 20b** and between a module case **30** and a battery cell **22** at the end of the cell assembly 50. As a result, heat generated in one module may be blocked or delayed from being transmitted to an adjacent module.

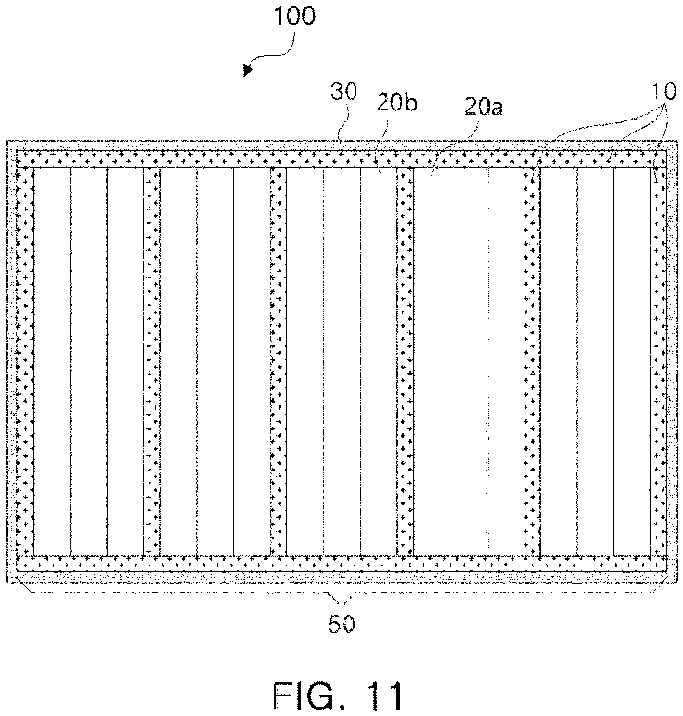

In certain embodiments, the thermal barrier **10** may be additionally disposed between all sides of the cell assembly **50** and module case **30** in which it is disposed, such as shown in **FIG. 11****.** As illustrated in **FIG. 11****,** a thermal barrier **10** is disposed between adjacent battery cells **20a, 20b,** as well as between one or more surfaces of a cell assembly **50** and a module case **30,** *e.g.,* around the periphery of the cell assembly **50** between the cell assembly **50** and the module case **30.**

Some of the various implementation examples of the battery module provided in the present disclosure are illustrated in **FIGS. 9** to **11. FIGS. 9** to **11** illustrate embodiments of battery modules **100** comprising two to three battery cells **22** disposed between thermal barriers **10,** however, battery modules comprising thermal barriers are not limited to these embodiments, and may be disposed in various forms.

### EXAMPLES

### Manufacturing Example 1

Water (DI-Water) and polyacrylamide (PAM) were mixed at a weight ratio (water:PAM) as illustrated **in Table 1,** stirred for 1 hour, and then left to produce a hydrogel.

**Table 1**

| | **PAM (g)** | **Water (g)** | **PAM (part by weight based on 100 parts by weight of water)** |
|---|---|---|---|
| Comparative Example 1 | 0.1 | 10 | 1 |
| Comparative Example 2 | 0.2 | 10 | 2 |
| Inventive Example 1 | 0.3 | 10 | 3 |
| Inventive Example 2 | 0.4 | 10 | 4 |
| Inventive Example 3 | 0.94 | 18.79 | 5 |
| Inventive Example 4 | 1.65 | 16.5 | 10 |
| Comparative Example 3 | 2.9 | 19.32 | 15 |

### Visual Observation

For each manufactured hydrogel, presence of grains was observed visually, and results therefrom were illustrated in Table 2. Presence of grains indicated absence of a gel phase.

Hydrogels displaying fluidity within 3 seconds after being disposed on a flat floor at room temperature (25 °C) were characterized as having fluidity, whereas hydrogels that shook but maintained its shape were characterized as not show fluidity. Results from fluidity testing are illustrated in Table 2.

**Table 2**

| | **Visual Observation** | |
|---|---|---|
| | Fluidity/Grains | Gel |
| Comparative Example 1 | Fluidity/Absent | O |
| Comparative Example 2 | Low Fluidity/Absent | O |
| Inventive Example 1 | Absent/Absent | O |
| Inventive Example 2 | Absent/Absent | O |
| Inventive Example 3 | Absent/Absent | O |
| Inventive Example 4 | Absent/Absent | O |
| Comparative Example 3 | Absent/Present | X |

As can be seen from the results in Table 2 above, in Comparative Example 1 comprising 1 part by weight PAM, grains were not visually observed, and thus it was evaluated as having a gel phase (O). However, the Comparative Example 1 immediately collapsed indicating fluidity.

No grains were visually observed in Comparative Example 2 comprising 2 parts by weight PAM, and thus it was evaluated as having a gel phase. However, Comparative Example 2 partially collapsed within 3 seconds, and indicated fluidity.

Hydrogels manufactured according to Inventive Examples 1 to 4 were absent grains and did not collapse and maintained a gel phase. Accordingly, Inventive Examples 1 to 4 were characterized as not having fluidity.

Although the hydrogel of Comparative Example 3 maintained its shape, grains were observed and thus it was characterized as not having a gel phase (X).

### Evaluation of Falling Distance

Movement distances (falling distances, mm) of the hydrogels manufactured in Comparative Examples 1 and 2 and Inventive Examples 1 to 3 over time at different concentrations of PAM were measured according to ASTM D4212 using a Zahn Cup viscometer (diameter: 4.39 mm).

After measuring each sample seven (7) times, the average of the middle five (5) data (excluding the highest and lowest value) was calculated. The results are provided in Table 3.

**Table 3**

| | **Falling Distance (mm) over Time** | | | | | |
|---|---|---|---|---|---|---|
| | 5 min | 10 min | 15 min | 20 min | 25 min | 30 min |
| Comparative Example 1 | Fell within 1 minute | | | | | |
| Comparative Example 2 | 85 | 133 | 164 | 197 | 233 | 268 |
| Inventive Example 1 | 49 | 89 | 123 | 157 | 194 | 232 |
| Inventive Example 2 | 24 | 65 | 93 | 116 | 140 | 159 |
| Inventive Example 3 | 13 | 39 | 65 | 92 | 110 | 127 |

As can be seen from the results in Table 3 above, the hydrogel of Comparative Example 1 (comprising 1 part by weight PAM) fell within 1 minute.

The hydrogel of Comparative Example 2 (comprising 2 parts by weight PAM) exhibited a falling distance of 80 mm or more within 5 minutes.

The hydrogels manufactured according to Inventive Examples 1 to 3 showed significantly shorter falling distances than Comparative Examples 1 and 2, and were evaluated as having viscosity, specifically, showed a falling distance of less than 50 mm after 5 minutes. In Inventive Examples 1 to 3, it was found that as the concentration of PAM increased, shorter falling distances were obtained, indicating a higher viscosity.

### Thermal Propagation (TP) Test

The hydrogel manufactured in Inventive Example 2 was filled into a pouch having a thickness of 135 µm, and then sealed to manufacture a thermal barrier having a sheet shape. The pouch("shell") is formed of a laminated sheet, with resin layers laminated on both surfaces of an aluminum foil. The inner resin layer, disposed on one side of the aluminum foil, is a polyolefin-based resin such as polyethylene or polypropylene. The outer resin layer, disposed on the other side, includes a first outer resin layer of polyamide and a second outer resin layer of polyethylene terephthalate.

Batteries were disposed on both first and second surfaces of the thermal barrier and a thermal propagation (TP) test was performed on the battery disposed on the first surface according to UL9540A.

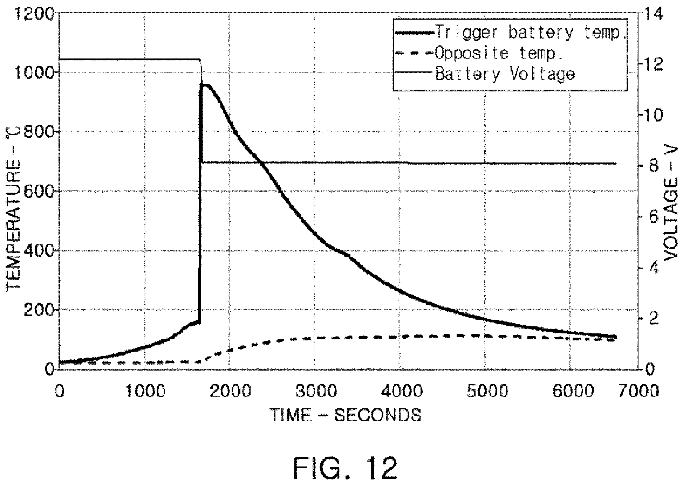

Specifically, a thermal runaway situation was initiated in the battery on the first surface of the thermal barrier, and temperature and voltage changes over time of the battery on the first surface and the temperature change over time of the battery on the second surface was measured. The results of this test are provided in **FIG. 12****.**

**In** **FIG. 12****,** the bold solid line (Trigger battery temp.) represents the temperature change over time of the battery disposed on the first surface of a thermal barrier on which the thermal runaway was initiated, the gray solid line (Battery Voltage) represents the voltage change over time, and the dotted line (Opposite temp.) represents the temperature change of a battery disposed on a second surface of the thermal barrier.

As can be seen from **FIG. 12****,** even though the thermal runaway situation occurred in the battery disposed on the first surface of the thermal barrier and there was a rapid temperature increase of close to about 1000 °C, the battery disposed on the second surface of the thermal barrier showed a temperature increase of only about 100 °C. This demonstrates that the thermal barrier, which was manufactured according to the present disclosure, displays excellent heat absorption and may effectively block heat propagation in a battery, *e.g.,* during a thermal runaway. As such, propagation of heat or flames occurring in a single battery cell in a battery module to another battery cell adjacent thereto in a thermal runaway situation may be effectively prevented or delayed by disposing a thermal barrier manufactured according to the present disclosure therebetween.

Only specific examples of implementations of certain embodiments are described. Variations, improvements and enhancements of the disclosed embodiments and other embodiments may be made based on the disclosure of this patent document.

The present disclosure relates also to the following numbered aspects:
Aspect 1) A thermal barrier comprising a heat-absorbing layer comprising a hydrogel, wherein the hydrogel comprises an absorbent polymer and water retained in the absorbent polymer, and wherein the hydrogel comprises about 3 parts by weight to about 10 parts by weight of the absorbent polymer based on 100 parts by weight of water.
Aspect 2) The thermal barrier of aspect 1, wherein the absorbent polymer comprises at least one polymer selected from the group consisting of polyacrylamide (PAM), polyacrylic acid (PAA), and a PAM-PAA copolymer.
Aspect 3) The thermal barrier of aspect 1 or 2, wherein the hydrogel displays a falling distance of 60 mm or less after 5 minutes when measured according to ASTM D4212 using a Zahn Cup viscometer having a diameter of 4.39 mm.
Aspect 4) The thermal barrier of any one of aspects 1 to 3, wherein the heat-absorbing layer is encased in a shell.
Aspcet 5) The thermal barrier of any one of aspects 1 to 4, wherein the shell has a thickness of about 80 µm to about 160 µm.
Aspect 6) The thermal barrier of aspect 4, wherein the shell is a laminate sheet comprising a metal foil, which is optionally is an aluminum foil .
Aspect 7) The thermal barrier of aspect 6, wherein the aluminum foil is disposed between an inner resin layer and an outer layer resin layer.
Aspect 8) The thermal barrier of claim 6 or 7, wherein the laminate sheet further comprises an adhesive on one or both sides of the aluminum foil.
Aspect 9) The thermal barrier of aspect 7 or 8, having one or more of the following characteristics (i) to (iii), respectively alone or in combination:
   (i) wherein the outer resin layer comprises a first outer resin layer adjacent to the aluminum foil, and a second outer resin layer located on the first outer resin layer,
   (ii) wherein the adhesive is disposed between the first outer resin layer and the aluminum foil, and/or
   (iii) wherein the first outer resin layer comprises a polyamide and the second outer resin layer comprises polyethylene terephthalate.
Aspect 10) The thermal barrier of any one of aspects 1 to 9, further comprising a mica sheet, optionally disposed on at least one layer of the shell.
Aspect 11) The thermal barrier of aspect 10, wherein the mica sheet comprises mica and a heat-resistant inorganic fiber.
Aspect 12) The thermal barrier of aspect 11, wherein the heat-resistant inorganic fiber comprises at least one selected from the group consisting of a glass fiber, an alumina fiber, a zirconia fiber, a mullite fiber, rock wool, asbestos, silica wool, and ceramic wool.
Aspect 13) The thermal barrier of any one of aspects 1 to 12, wherein the hydrogel comprises about 3 parts by weight to about 10 parts by weight of PAM based on 100 parts by weight of water.
Aspect 14) A battery module comprising: a cell assembly comprising two or more battery cells; and a module case comprising the cell assembly, wherein the cell assembly comprises the thermal barrier of any one of aspects 1 to 13 disposed
   i) between two adjacent battery cells,
   ii) between a module case and the battery cells at the ends of the cell assembly; or
   iii) both i) and ii).

## Claims

1. A thermal barrier comprising a heat-absorbing layer comprising a hydrogel,
wherein the hydrogel comprises an absorbent polymer and water retained in the absorbent polymer, and
wherein the hydrogel comprises about 3 parts by weight to about 10 parts by weight of the absorbent polymer based on 100 parts by weight of water.

2. The thermal barrier of claim 1, wherein the absorbent polymer comprises at least one polymer selected from the group consisting of polyacrylamide (PAM), polyacrylic acid (PAA), and a PAM-PAA copolymer.

3. The thermal barrier of claim 1 or 2, wherein the hydrogel displays a falling distance of 60 mm or less after 5 minutes when measured according to ASTM D4212 using a Zahn Cup viscometer having a diameter of 4.39 mm.

4. The thermal barrier of any one of claims 1 to 3, wherein the heat-absorbing layer is encased in a shell.

5. The thermal barrier of any one of claims 1 to 4, wherein the shell has a thickness of about 80 µm to about 160 µm.

6. The thermal barrier of claim 4, wherein the shell is a laminate sheet comprising a metal foil, which is optionally is an aluminum foil .

7. The thermal barrier of claim 6, wherein the aluminum foil is disposed between an inner resin layer and an outer layer resin layer.

8. The thermal barrier of claim 6 or 7, wherein the laminate sheet further comprises an adhesive on one or both sides of the aluminum foil.

9. The thermal barrier of claim 7 or 8, having one or more of the following characteristics (i) to (iii), respectively alone or in combination:
(i) wherein the outer resin layer comprises a first outer resin layer adjacent to the aluminum foil, and a second outer resin layer located on the first outer resin layer,
(ii) wherein the adhesive is disposed between the first outer resin layer and the aluminum foil, and/or
(iii) wherein the first outer resin layer comprises a polyamide and the second outer resin layer comprises polyethylene terephthalate.

10. The thermal barrier of any one of claims 1 to 9, further comprising a mica sheet, optionally disposed on at least one layer of the shell.

11. The thermal barrier of claim 10, wherein the mica sheet comprises mica and a heat-resistant inorganic fiber.

12. The thermal barrier of claim 11, wherein the heat-resistant inorganic fiber comprises at least one selected from the group consisting of a glass fiber, an alumina fiber, a zirconia fiber, a mullite fiber, rock wool, asbestos, silica wool, and ceramic wool.

13. The thermal barrier of any one of claims 1 to 12, wherein the hydrogel comprises about 3 parts by weight to about 10 parts by weight of PAM based on 100 parts by weight of water.

14. A battery module comprising:
a cell assembly comprising two or more battery cells; and
a module case comprising the cell assembly,
wherein the cell assembly comprises the thermal barrier of any one of claims 1 to 13 disposed
i) between two adjacent battery cells,
ii) between a module case and the battery cells at the ends of the cell assembly; or
iii) both i) and ii).
